# EUROPEAN PATENT SPECIFICATION

(11) **EP 2 211 078 B1**
(45) Date of publication and mention of the grant of the patent: **27.03.2019**
(21) Application number: 09002322.7
(22) Date of filing: 19.02.2009
(51) Int. Cl.: F16K 31/00, F16K 31/122, F04B 53/10, F01L 9/04

(54) **Valve actuator**
Ventilaktor
Actionneur de soupape

(30) Priority: 07.01.2009 EP 09000075
(43) Date of publication of application: 28.07.2010
(73) Proprietor: Danfoss Power Solutions Aps, 6430 Nordborg (DK)
(72) Inventor: Kuttler, Onno, Cousland/Dalkeith, EH22 2PD (GB); Wadsley, Luke, Edinburgh, EH3 6NL Scotland (GB)
(74) Representative: Nestler, Jan Hendrik

(56) References cited:
- EP-A1- 1 199 501
- US-A1- 2005 067 596
- US-A1- 2007 272 890
- US-B1- 6 315 265

## Description

The invention relates to a valve actuator for actuating the valve part of an actuated valve. The invention further relates to a valve unit, comprising such a valve actuator. Additionally, the invention relates to a fluid working machine, using such a valve actuator and/or such a valve.

When a fluid inlet, a fluid outlet or an internal fluid port of a device has to be opened, closed or regulated in an automated way and/or in response to an external signal, actuated valves are the appropriate device for dealing with this task.

Such actuated valves are widely used, e.g. in engines of motor vehicles, where the actuation signal is normally applied by mechanical transmission using a camshaft. However, the use of actuated valves is not restricted to engines. In the meantime, for example, actuated valves are also used in fluid working machines, such as in hydraulic motors and particularly in hydraulic pumps.

A relatively new approach for building hydraulic machines (i.e. hydraulic pumps and hydraulic motors) are the so called synthetically commutated hydraulic pumps, also known as digital displacement pumps. They are a subset of variable displacement hydraulic machines. One of the major advantages of synthetically commutated hydraulic machines is their energy efficiency, as well as their ability to quickly adapt to rapidly changing hydraulic fluid flow demands.

The difference between a synthetically commutated hydraulic pump and a standard hydraulic pump basically lies in the replacement of the normally passive fluid inlet valves, fluidly connecting the hydraulic fluid inlet manifold to the pump's cyclically changing pumping cavity, by actively controlled actuated valves. For performing a pumping function, it is sufficient to replace the passive low pressure fluid inlet valves by actuated valves, while the high pressure valves may continue to be passive valves.

A synthetically commutated hydraulic pump can be operated in a full stroke pumping mode, a part stroke pumping mode and an idle mode:
In the full stroke pumping mode, the actuated fluid inlet valves are controlled in a way, similar to the opening and closing behaviour of passive valves that are opening and closing under the generated pressure differences caused by the fluid flow in standard hydraulic pumps.

In the idle mode, the actuated fluid inlet valves remain open throughout the whole pumping cycle. During the expansion phase of the hydraulic pump's pumping cavity, hydraulic fluid is sucked into the pump's expanding pumping cavity. When the pumping cavity eventually starts to contract, the hydraulic fluid is ejected through the still open orifice of the fluid inlet valve, back towards the pump's low pressure side.

In the part stroke pumping mode, the actuated fluid inlet valve initially remains open, when the contracting cycle of the pumping cavity starts. Therefore, initially the hydraulic fluid is ejected back towards the low pressure side of the pump. At a certain point during this contraction phase, however, the actuated fluid inlet valve will be closed by a signal of the hydraulic pump's controller. Starting at this point, the way back to the low pressure side is blocked for the hydraulic fluid, still remaining within the pump's pumping cavity. Consequently, the fluid will now be ejected towards the high pressure side of the hydraulic pump. Due to this "late closing" of the fluid inlet valve, only a fraction of the pump's cyclically changing volume of the pumping cavity is used for pumping towards the high pressure side. Therefore, the pumping performance can be adapted to the actual need for hydraulic fluid. This adaption can be done extremely fast. Normally the fluid output flow can be changed from one pumping cycle to the next.

Although the working principle of synthetically commutated hydraulic pumps has been described with reference to a single piston pump, a synthetically commutated hydraulic pump can be constructed with a plurality of cylinders as well.

Furthermore, if the passive high pressure valves are replaced by actuated valves as well, a motoring mode can be implemented by a corresponding actuation of the high pressure valves and low pressure valves. This motoring mode cannot only be performed in a full stroke motoring mode, but also in a part stroke motoring mode, if the fluid inlet valves and the fluid outlet valves are actuated during the contraction phase and/or expansion phase of the hydraulic pump's cavity accordingly.

Particularly the part stroke pumping mode necessitates an exact timing of the opening and closing movements of the valves. Furthermore, the time needed to open and/or to close the valves has to be very short. In particular, the speed of the opening and/or the closing movement of the valves has to be higher as compared to existing pumps, and the timing has to be more accurate.

In standard hydraulic pumps, the opening and the closing of the valves takes place solely at the top dead centre (TDC) and the bottom dead centre (BDC) of the piston. At these points, the velocity of the fluid, flowing through the valve's orifice, is zero, or is at least close to zero in practical embodiments.

In the synthetically commutated hydraulic machine concept, however, at least part of the opening and/or closing movement of the valve takes place somewhere between the TDC and BDC of the piston, where the velocity of the fluid passing through the valve's orifice can be substantial. Hence, even a small deviation of the actual closing time as compared to the desired closing time can result in a substantial deviation of the actual fluid output flow rate as compared to the currently required fluid flow rate. Furthermore, due to the high fluid velocity, a slow closing action of an actuated valve can lead to undesired noise and even to cavitation effects, resulting in an increased wear and a potential damage of the valve and the valve seat.

Because of these very stringent requirements, solutions which work well in the technical area of valve actuation for combustion engines are normally not suited for the technical field of synthetically commutated hydraulic pumps.

Usable actuated valves have been proposed e.g. in US 2005/0067596 A1. Although this design works in principle, it still suffers from serious drawbacks. One problem is the high demand of electrical energy to move the actuated valve into its closed position. This is particularly true for the initial acceleration phase of the valve. Another drawback is the permanent magnet. In the actual design, currently realised by the inventors of US 2005/0067596 A1, the permanent magnet consists of NeFeB. These magnets are known to have a limited temperature range and are susceptible to being brittle. This is problematic when considering the repetitive impact of the valve head onto its valve seat, when the valve is closing. Furthermore, the long term behaviour of the magnet when its magnetic field is repetitively cancelled by the magnetic coil in this design remains an open question. Also, the recycling of the valve might prove to be problematic.

Another approach to solve the problem was suggested by Gandrud in US 7,300,260 B1. Here the use of a magnetorheological or an electrorheological fluid instead of actuated mechanical valves is proposed. This approach, however, severely limits the range of usable hydraulic fluids. Also, tightness issues and/or an increased wear are present. Nevertheless, this approach clearly shows that currently available valves are still unsatisfying.

Particularly in the remote technical field of combustion engines the use of mechanical energy storing units for valve actuators is known as such. For example, in US 6,315,265 B1, a valve timing actuator that allows the opening and closing of engine valves to be variably and individually controlled without using a camshaft is disclosed. The valve timing actuator utilises energy regeneration using potential energy storage devices such as springs. For this, spring seats are moved in relation to the valve to "charge" the energy storing springs with respect to the valve. During the "charging" of the energy storing springs, the valve is held in place by latching sprags. The latching sprags are actuated by a latching piston, which is actuated by pressurised fluid, which is delivered to a latching piston input chamber and/or a latching piston output chamber of the latching piston, so that the latching piston can be moved in an axial direction. Generally speaking, solutions for valve actuators in the technical field of combustion engines usually cannot be used in the technical field of fluid working machines (particularly hydraulic fluid working machines, especially synthetically commutated hydraulic machines). This is because the fluid, used in fluid working machines is usually significantly more viscous than the gases present in combustion engines. Therefore, in fluid working machines the fluid flow cross-sections as well as the actuation strokes of the valve actuators have to be much larger. Furthermore, the timing accuracy and the actuation speed of the valve actuators have to be very high in fluid working machines. This is particularly true for synthetically commutated hydraulic machines, where a valve actuation can take place anywhere between the bottom dead centre at the top dead centre of the piston.

In US 2007/0272890 A1 another type of valve with an electromagnetic actuator has been proposed. The electromagnetic actuator includes a solenoid. The solenoid includes at least one core, wherein the core is an "E" shaped core or a "U" shaped core, and an anchor plate. The solenoid further comprises at least one coil disposed within the core and connected to a set of power electronics to supply current to the coils. The actuator further comprises a plunger connected to the anchor plate and at least one spring configured to guide the plunger. The opening and closing of the valve is controlled by passing current through the coil.

The object of the present invention is to provide for an improved valve actuator, particularly suited for synthetically commuted hydraulic pumps. Another object of the invention is to provide for an improved valve unit. Yet another object of the invention is to provide for an improved fluid working machine.

It is suggested to design a valve actuator, comprising at least one driving means for driving a valve to be actuated by said valve actuator and at least one triggering unit for triggering a movement of said driving means to open and/or to close said valve, wherein said triggering unit is a directly driven triggering unit, converting an input signal directly into a triggering signal of said triggering unit without a change of the energy form of said input signal, in a way that at least one mechanical energy storing unit is provided. At least one preloading means for preloading said mechanical energy storing unit is provided, wherein said preloading means is designed as a fluid actuated preloading means. At least one internally operated controlling means and/or at least one externally operated controlling means, controlling the operation of said preloading means is provided, that is designed as a cyclically operated unit. Using such a mechanical energy storing unit it is possible to provide for the energy eventually needed to actuate the triggering unit and/or the driving means, over an elongated time interval. Additionally or alternatively, it is possible to store energy that is taken from the triggering unit and/or the driving means itself, particularly during certain phases of the working cycle of the valve actuator. As an example, while for the opening movement of the actuated valve external energy is needed, energy might be set free during the closing movement of the actuated valve. The energy, accumulated within the mechanical energy storing unit (which is possibly accumulated over an elongated time span), can be released quickly at the desired time. It is usually particularly advantageous, if a preferably large fraction of the mechanical energy, stored in the mechanical energy storing unit, is released in the very beginning of the movement of the triggering unit and/or the driving means. This way, it is possible to make the response of the driving means to the triggering signal faster. Additionally or alternatively, it is possible to decrease the power, which has to be provided at the time of the actuation of the driving means. Therefore, it is possible to use a simpler and more cost-effective design of at least some of the components of the valve actuator. Furthermore it is possible to use different sources of energy for the triggering signal of the triggering unit and for the loading of the energy storing unit. In particular, it is possible to use a source of energy for loading said mechanical energy storing unit that is relatively slow. Ideally, the loading of the energy storing unit can be performed over a time span that is long, relative to the actuation period of the valve actuator. This can further simplify the design of the valve actuator. Furthermore, overall energy consumption can be decreased as well, particularly when considering a certain energy form. It is even possible that the waste energy of a certain system can be used to trigger the triggering unit and/or to load the mechanical energy storing unit at least in part. By the notion "directly driven triggering unit", in particular a unit is meant, where the triggering signal, which normally is present in form of a mechanical signal and/or an electrical signal, is directly converted into a change of state of the triggering unit, which finally results in a movement of the driving means. In this context, electrical and magnetical energy forms can usually be considered to be a single energy form, i.e. as the electromagnetic energy form. By such a construction, usually a particularly fast, timely and reliable movement of the driving means can be assured. By "directly driven", an amplifier, a filter or a similar device is not necessarily excluded. Instead, "directly driven" usually refers to a system, where the energy form remains at least substantially unchanged and/or unmodified. Of course, the presently suggested valve actuator can be used to actuate the actuated valve in any possible way. Hence, any sensible part of the actuated valve (or even several parts of the actuated valve) can be actuated by the valve actuator (and/or by a plurality of valve actuators). As an example, a valve typically comprises a valve cone and a valve seat. Therefore, the valve actuator can either actuate the valve cone, the valve seat or both.

The valve actuator comprises at least one preloading means for preloading said mechanical energy storing unit, wherein said preloading means is designed as a fluid actuated preloading means. Preferably, said preloading means is designed as a hydraulic fluid actuated preloading means. While it is possible that the mechanical energy storing unit is loaded e.g. by the driving means of the valve actuator itself during certain phases of the working cycle of the valve actuator, it is preferred that the preloading of the mechanical energy storing means is done at least in part by a separate component (more preferably the majority of the preloading of the mechanical energy storage means is done by a separate component). This does not necessarily mean that the preloading means is a special component, provided solely for preloading the mechanical energy storage unit. Instead, it is possible that the preloading means serves an additional purpose as well. For instance, a magnetic coil (or a different device) could be provided, which serves as a triggering unit as well as a preloading means. However, the different purposes will usually be served at different times. The preloading means can use any energy form. However, it is preferred that said preloading means is designed as a fluid actuated preloading means and even more preferred that said preloading means is designed as a hydraulic fluid actuated preloading means. This is particularly true if the valve actuator is used in connection with fluid working machines, preferably with synthetically commutated fluid working machines. This is because in the field of fluid working machines, pressurised fluid is usually already present. This pressurised fluid, however, can be advantageously used for the preloading means. In principle, any kind of fluid can be used. As an example, gases, liquids and supercritical fluids (where no distinction between liquid and gas can be made anymore) can be used. Of course, mixtures are also possible. For example, as a fluid, a liquid containing a certain amount of gas bubbles and/or a gas, containing a certain amount of fluid droplets (fog) is possible. Also, the fluid (gas and/or liquid, for example) may contain a certain amount of solid particles (smoke, suspensions, etc). Even more preferably, the preloading means can be designed as a hydraulic fluid actuated preloading means. This is particularly true, if the valve actuator is used for hydraulic fluid working machines, because in such a case hydraulic fluid is already present. It has to be noted that in several applications (including, but not limited to hydraulic machinery), there is quite often a fluid reservoir at an elevated pressure and/or a return flow of fluid at a still elevated pressure. This pressure can be used for actuating the preloading means. In particular, a return fluid flow at the still elevated pressure can be used to perform useful work, instead of being simply dumped into a storage tank at ambient pressure. This way, the overall energy consumption of the hydraulic machinery can be lower. An example of such a system is a power steering.

The valve actuator is designed to have at least one internally operated controlling means, controlling the operation of said preloading means. Preferably, the controlling means is controlled, at least in part, by the position of said driving means and/or by the operating state of said mechanical energy storing unit and/or by the operating state of said triggering unit and/or by the operating state of said preloading means. Examples for values, which can be used for controlling said controlling means are the position of the driving means, the operating state of said mechanical energy storing unit, the operating state of said triggering unit and/or the operating state of said preloading means. Of course, a combination of two or more of the said values is possible. Also, other values, not mentioned here, can be used alternatively and/or additionally. By the notion "internally operated controlling beans", in particular controlling means are encompassed, which take at least part of their input signals, preferably the majority or all of their input signals from parts within the valve actuator itself. This way, the use of the valve actuator can be simplified, because all or at least a part of the external connections for controlling the controlling means and hence for operating the valve actuator can be avoided. This way, the replacement of a valve actuator according to the state of the art by a suggested valve actuator can be done easier. It is even possible to provide a valve actuator, which can be used as a drop-in solution. Another advantage of internally operated controlling means can be a higher reliability. This is, because erroneous controlling signals (for whatever reason), coming from external means, have a lower or even no negative influence at all on the operation of the internally operated controlling means, and hence of the valve actuator. This cannot only increase the reliability of the valve actuator, but also of the resulting machinery, for example of an actuated valve and/or of a fluid working machine, using the suggested valve actuator. The control of the internally operated controlling means can be performed at least in part by the movement of internal parts of the valve actuator and/or by using actuation signals, which are "originally" meant for controlling different parts of the valve actuator. Usually, at least some parts of the valve actuator will show a mechanical displacement during the working cycle of the valve actuator. This mechanical displacement can be advantageously used for controlling (at least in part) the internally operated controlling means. Also, external controlling signals, which are used, for example, to control the position of the driving means, can additionally be used to directly or indirectly control the operation of the internally operated controlling means as well. Doing this, no additional controlling connections have to be provided for the internally operated controlling means.

It is preferred to design said internally operated controlling means, at least in part, as a spool valve and/or as a check valve and/or as a poppet valve and/or as an armature device. Experiments with prototypes have shown that such devices are particularly suited as internally operated controlling means.

Additionally and/or alternatively to the design with at least one internally operated controlling means, said valve actuator is designed to have at least one externally operated controlling means, controlling the operation of said preloading means. Preferably, the externally operated controlling means is controlled, at least in part, by an externally applied controlling signal and/or by the operating state of the valve, actuated by said valve actuator. By the notion "externally operated controlling means", in particular a unit is meant, which is, at least in part, controlled by external signals. These external signals can be provided in the form of controlling signals, which are mainly or even exclusively generated for controlling said externally operated controlling means. An example would be an electric actuation signal which is fed into the valve actuator for changing the operating state of said preloading means. Another example would be a fluid feeding line, which is pressurised and/or depressurised in a certain way, to change the operating
state of the preloading means. However, it is also possible to use controlling signals, which are already present. An example would be the pressure within a pumping chamber of a hydraulic pump. This pressure can also be used for controlling (at least in part) the externally operated controlling means. Of course, if a complete valve is considered as a singular unit, a controlling means which is controlled by the fluid pressure near the poppet valve might be considered to be an internally operated controlling means, for example.

Preferably, said externally operated controlling means is designed, at least in part, as a pressure operated valve and/or as an electrically operated valve and/or as a spool valve and/or as a poppet valve and/or as a check valve. Experiments with prototypes have shown that these devices are particularly well suited for externally operated controlling means.

Furthermore, it is possible to design said valve actuator in a way that said preloading means can be selectively connected to a high pressure fluid reservoir and/or to a low pressure fluid reservoir. Preferably this can be done, at least in part, by at least one of said internally operated controlling means and/or at least in part by at least one of said externally operated controlling means. This way, the operating state of the preloading means can be changed easily and effectively. In particular, it has to be noted that high pressure fluid reservoirs and/or low pressure fluid reservoirs are usually already present in hydraulic machinery. Therefore, the design of the overall device, using the suggested valve actuator, can be kept relatively simple.

Preferably, the valve actuator is designed in a way that said triggering unit is designed as an electrically actuated triggering unit, preferably comprising at least one magnetic field generating means, more preferably comprising a magnetic coil. By such a design, electrical signals can be used for triggering the directly driven triggering unit. Using an electrically controlled actuation of the triggering unit, and hence of the valve actuator, normally a particularly fast, cost-effective, timely and energy-conserving actuation of the valve actuator can be assured. Particularly in the field of fluid working machines, even more particularly in the field of synthetically commutated hydraulic pumps, but also in other technical fields, usually an electronic controlling unit is already present. Such an electronic controlling unit can easily take over the control of the actuated valve(s) as well. Quite often, the actuation of the actuated valve(s) is already performed by an electronic controlling unit. Using a magnetic field generating means and/or a magnetic coil, electrical signals can be directly converted into a magnetic field, which in turn can generate a force, triggering the movement of the driving means. The magnetic field generating means, in particular the magnetic coil can comprise a magnetic core and/or a magnetic yoke, preferably manufactured from a soft magnetic material. This way, the electric currents, necessary for generating a given magnetic field can be lower, resulting in a lower overall consumption of electrical energy and/or in a simplified design of the valve actuator and of additional devices, necessary for driving the valve actuator.

It is also possible to design the valve actuator in a way that the mechanical energy storing unit comprises at least one device, taken from the group containing springs, metal springs, elastic material, rubber, fluid energy storage devices, hydraulic energy storage devices and gas pressure devices. The use of one or several of these devices usually results in a cheap and reliable device, showing good performance. Particularly when using a spring (e.g. a coil spring), it is also possible to design the device in a way that it shows a non-linear connection between exerted force and distance of deformation. Thus the device can be even more optimised for its purpose. With an adapted connection between exerted force and distance of deformation it is possible, for example, to provide for a zero pumping rate of a hydraulic working machine, in case the controller and/or the energy for driving the actuated valves fails. On the other hand it is also possible to provide for a fail-safe mode, providing a certain pumping rate in this case. This is particularly sensible for critical applications, e.g. for a power steering or the like.

Furthermore it is suggested to provide a valve actuator with at least one dampening means, in particular at least one dampening spring. Due to the high speed that certain parts of the valve actuator can have, particularly when using the accelerating force of the mechanical energy storing unit, an increased wear can result, when the respective parts reach their end positions. To slow down the parts more smoothly, the proposed dampening means can be used. It is noticed that the dampening means and the mechanical energy storage unit can even fall together. With such an embodiment, energy can even be recycled for the next working phase of the valve actuator. Of course, the dampening elements can also be taken from the group containing springs, metal springs, elastic material, rubber, fluid energy storage devices, hydraulic energy storage devices and gas pressure storage elements.

A preferred embodiment can be realised if said triggering unit and/or said driving means and/or said mechanical energy storing unit and/or said internally operated controlling means and/or said externally operated controlling means is designed as a cyclically operated unit, preferably operatable during essentially every working cycle of said valve actuator. This way it is possible to design the respective device(s) relatively simply. In particular, due to the repetitive nature of the applying force as well as of the charging force, charging the preloading means and/or the mechanical energy storing unit, said preloading means and/or said mechanical energy storing unit generally does not have to bridge elongated time intervals. Thus in particular devices can be used, which lose their stored energy relatively quickly with time. In the case of preloading means, which are designed as fluid actuated preloading means, for example, the respective parts can hence show some fluid leakage without affecting the operation of the valve actuator negatively. Therefore a simplified machining of the respective parts can be performed, which can result in a cost reduction. Another aspect of the repetitive nature is that the respective device usually does not have to store an excessive amount of energy, because it is well known, when the next charging step will occur. This is different to non-repetitive environments, where it is not clear how many discharging steps will occur before the next charging step comes up, for example. Also, due to the repetitive nature of these devices, the resulting valve actuator is particularly well-suited for machinery, having a repetitive operating nature. For example, such valve actuators can be used for valves, used in fluid working machines.

Furthermore it is suggested, to provide a valve unit, in particular a valve unit for a hydraulic working machine, with at least one valve actuator according to the preceding suggestions. Such a valve unit can be modified analogously and will show the already mentioned effects and advantages in a similar way.

Also, a fluid working machine is suggested that is provided with at least one valve actuator according to the preceding description and/or at least one valve unit according to the preceding description. The notion "fluid working machine" comprises in particular fluid pumps, fluid motors, hydraulic pumps, hydraulic motors, pressurised gas pumps, pressurised gas motors and combinations thereof. The resulting device can be modified similarly to the already given description and will show the already mentioned effects and advantages in a similar way.

Furthermore it is suggested to design such a fluid working machine at least partially as a hydraulic fluid working machine, preferably as a synthetically commutated hydraulic machine. Especially for synthetically commutated hydraulic machines, the above mentioned actuated valves and/or valve actuators are especially well suited. This is, because particularly synthetically commutated hydraulic machines (pumps, motors and combinations thereof) need very fast and accurately working actuated valves for functioning properly. However, this can be assured with the design proposed above. As already mentioned, synthetically commutated hydraulic pumps are also known as digital displacement pumps. In this context an additional statement about the functionality of a valve actuator used in a synthetically commutated hydraulic machine should be made. For this it is necessary to understand the pumping cycle of a synthetically commutated hydraulic machine; so some additional comments are made in the following. Usually, as soon as the inlet valve is closed during the exhaust stroke pressure builds up and holds the inlet valve closed. The actuator of the valve usually only has to close the inlet valve initially - once closed it is usually held closed, at least in part, by the pressure in the pumping chamber and can usually only open after top dead centre, when the pressure has decreased again.

Further advantages, features, and objects of the invention will be apparent from the following detailed description of the invention in conjunction with the associated drawings, wherein the drawings show:
Fig. 1: a schematic drawing of a first embodiment of a valve actuator in different positions;
Fig. 2: a schematic drawing of a second embodiment of a valve actuator in different positions;
Fig. 3: a schematic drawing of a third embodiment of a valve actuator in different positions;
Fig. 4: a schematic drawing of a fourth embodiment of a valve actuator in different positions;
Fig. 5: a schematic drawing of a synthetically commutated hydraulic machine, comprising valve actuator according to the first embodiment of a valve actuator.

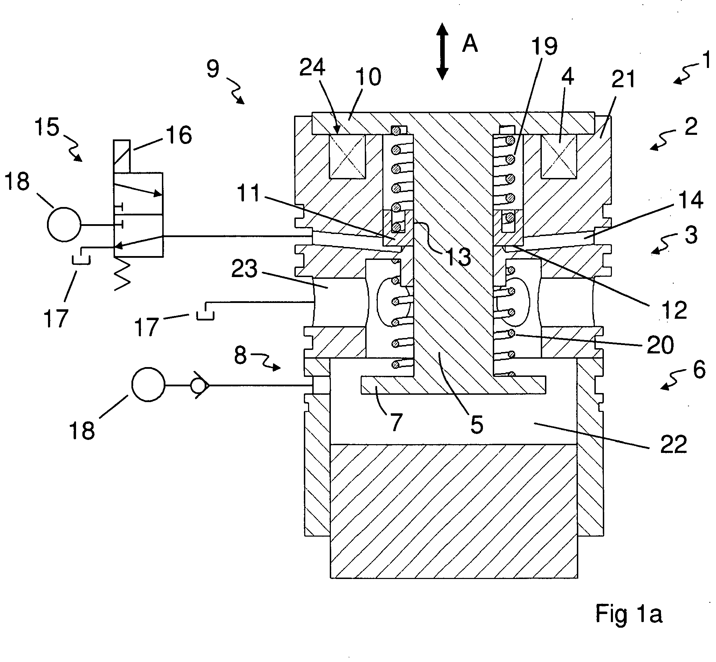

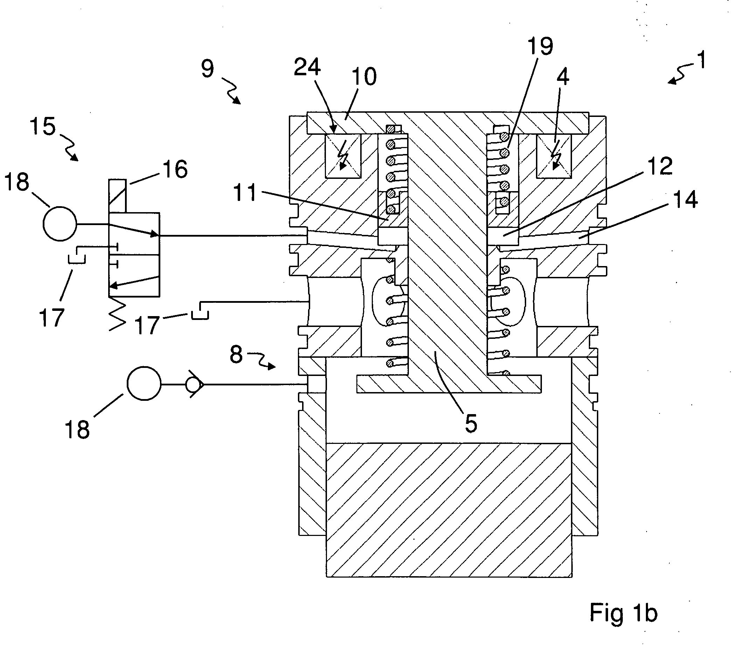

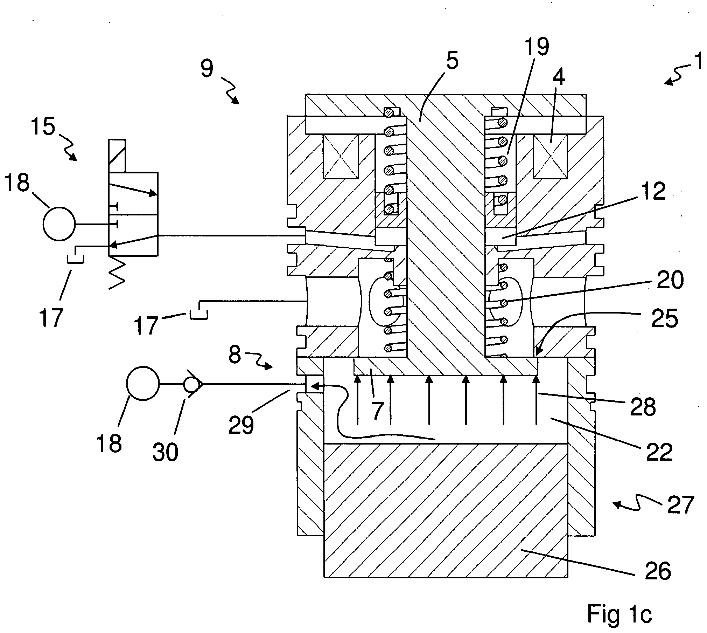

In Fig. 1 a first embodiment of a valve actuator 1 is shown in a schematic cross section. In the embodiment shown, the valve actuator 1 is designed with a rotationally symmetric shape. However, different designs are equally possible.

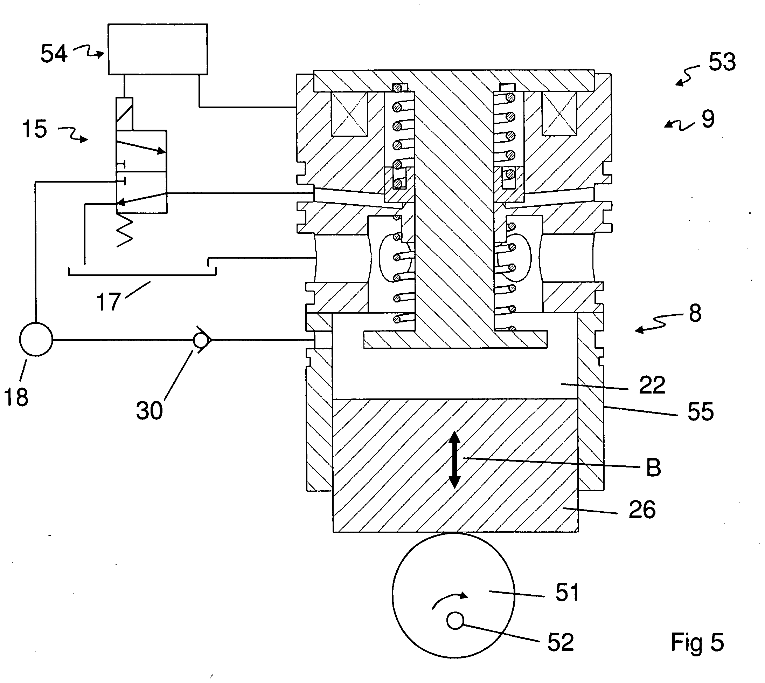

The valve actuator 1 comprises a driving section 2 for directly driving a valve stem 5, which can connect to a fluid influencing part 6 (see also Fig. 5), e.g. for moving a poppet head 7 of a poppet valve 8. Furthermore, the valve actuator 1 comprises a loading section 3 for loading the driving section 2 (details will be described later). Thus, a loaded actuated valve 9 can be realised.

In the embodiment, shown in Fig. 1, the driving section 2 is electrically driven, while the loading section 3 is mechanically driven by pressurised fluids.

More detailed, an electric current for actuating the driving section 2 is fed into an electric coil 4, which is provided in the driving section 2. Within the electrical coil 4, a magnetic field is generated, which is acting on an axially movable driving disc 10 of the driving section 2. If an electric current is applied to the electrical coil 4, the axially movable driving disc 10 can experience an attractive force towards the electrical coil 4 due to the magnetic field generated by the electrical coil 4.

The axially movable driving disc 10 of the driving section 2 is fixedly attached to the valve stem 5. Therefore, the valve stem 5 and the axially movable driving disc 10 always move together. Furthermore, the poppet head 7 of the poppet valve 8 is also fixedly connected to the valve stem 5. Therefore, axially movable driving disc 10, valve stem 5 and poppet head 7 move together as a single unit.

The loading section 3 also comprises an axially movable disc 11, namely a loading disc 11. Contrary to the driving disc 10, the loading disc 11 of the loading section 3 is slidingly movably connected to the valve stem 5. In other words, a hole 13 is provided in the loading disc 11, so that the valve stem 5 and the loading disc 11 can move freely against each other in an axial direction A.

The loading disc 11 is actuated by fluid pressure forces. The fluid pressure forces are brought into the loading section 3 of the valve actuator 1 by pressurising and depressurising charging chamber 12 through fluid feed line 14. The pressurisation and depressurisation of the charging chamber 12 can be performed by the pilot oil supply valve 15, as indicated in Fig. 1. In the embodiment, shown in Fig. 1, the pilot oil supply valve 15 is designed as a separate valve 15, which is electrically actuated by use of an electric actuator 16. Depending on the position of the pilot oil supply valve 15, the charging chamber 12 is either fluidly connected to a low pressure fluid reservoir 17 (as shown in Fig. 1a) or to a high pressure fluid reservoir 18 (as shown in Fig. 1c), thus depressurising and pressurising charging chamber 12; respectively.

Between the driving disc 10 and the loading disc 11, an energy storage spring 19 is provided. The function of the energy storage spring 19 will become clear from the following description. In the present embodiment, the energy storage spring 19 is designed as a coil spring, made of flexible steel material.

In addition to the energy storage spring 19, an opening spring 20 is provided. The opening spring 20 is connected to the poppet head 7 on one side and to a body part 21 of the valve actuator 1 on the other side. The opening spring 20 generates the biasing force, pushing the poppet head 7, and hence the valve stem 5 as well as the driving disc 10 into a lower position. If the valve actuator 1 is connected to a poppet valve 8, thus forming an actuated valve 9, as shown in Fig. 1, this corresponds to an open position of the actuated valve 9. In the open position of the actuated valve 9, the pumping chamber 22 and the low pressure port 23 (which in turn is connected to the low pressure fluid reservoir 17; see Fig. 5) are fluidly connected to each other. Depending on the actual use of the valve actuator 1 and/or on the actual design of the actuated valve 9, it is also possible that the opening spring 20 can be omitted.

In the four sketches a through c of Fig. 1, the actuation cycle of the valve actuator 1 (and hence of the actuated valve 9) is illustrated.

In its initial state, which is shown in Fig. 1a, the electric coil 4 of the driving section 2 of the actuated valve 9 is switched off. Therefore, no magnetic field is generated by the electric coil 4, which could attract the driving disc 10 into the open position of the poppet valve 8. Nevertheless, the poppet valve 8 of the actuated valve 9 is pushed to a fully open position by the force, exerted by the opening spring 20. In this open position of the actuated valve 9, the driving disc 10 (forming a part of the armature of the actuated valve 9) is already in contact with the flat face side 24 of the electric coil 4.

The pilot oil supply valve 15 connects the charging chamber 12 to the low pressure fluid reservoir 17, thus depressurising the charging chamber 12. Therefore, the loading disc 11 is in its lower position, as depicted in Fig. 1a. In this position, the energy storage spring 19 has little or no load, so that the opening force of the opening spring 20 is not counterbalanced. In the presently shown open position of the actuated valve 9, the pumping chamber 22 is fluidly connected to a low pressure port 23. If the actuated valve 9 is used as the inlet valve for a synthetically commutated hydraulic pump 53 (see Fig. 5), in this position of the actuated valve 9 the pumping unit 53 would be idling with unpressurised fluid moving back and forth between the pumping chamber 22 and the low pressure fluid reservoir 17 through the low pressure port 23 without performing effective pumping towards the high pressure fluid reservoir 18.

To close the actuated valve 9 (and to initiate a pumping stroke, if the actuated valve 9 is used as the inlet valve of a synthetically commutated hydraulic machine 53), the actuated valve 9 has to undergo some preparation prior to closing the poppet valve 8. First, the electric coil 4 is switched on by applying an appropriate electrical current. Due to the electric current, the electric coil 4 generates a magnetic field, which attracts the driving disc 10 by magnetic forces. This in turn latches the poppet valve 8 in its open position (lower position of the valve stem 5). The electrical current required for latching the poppet valve 8 in its open position is low, because the driving disc 10 is already in contact with the flat face side 24 of the electric coil 4. Therefore, the air gap between the electric coil 4 and the driving disc 10 is accordingly small (if present at all). Then, the position of the pilot oil supply valve 15 is changed by applying an appropriate signal to the electric actuator 16. Therefore, the charging chamber 12 is fluidly connected to the high pressure fluid reservoir 18 via fluid line 14 and pilot oil supply valve 15. Consequently, hydraulic fluid is flowing into the charging chamber 12, pushing loading disc 11 upward and compressing energy storage spring 19, thus preloading energy storage spring 19 with mechanical energy. The upward movement of the loading disc 11 can be limited by a mechanical stop or (as it is the case in Fig. 1) by the mechanical energy storage spring 19 itself. Despite the mechanical compression of the mechanical energy storage spring 19, the poppet valve 8 is still latched into its open position due to the still energised electric coil 4. The described situation is shown in Fig. 1b, where an actuated valve 9, having a mechanically loaded energy storage spring 19 and a poppet valve 8 which is held open is depicted. It should be noted that holding the actuated valve 9 in the open position of poppet valve 8 with the electric coil 4 switched on does consume some electrical energy, although the electric current needed for this is comparatively low because the driving disc 10 is in contact with the flat face side 24 of electric coil 4.

When the poppet valve 8 needs to be closed, the electric coil 4 is simply switched off (preferably by a fast turn-off circuit which helps the electric current to decay quickly). Since the latching force by the electric coil 4 is no longer present, the force, exerted by the compressed energy storage spring 19 (initially, the pilot oil supply valve 15 is still in a position, connecting the charging chamber 12 with the high-pressure fluid reservoir 18) will push the driving disc 10 and the valve stem 5 into their upper position. This is shown in Fig. 1c. Therefore, the poppet head 7 of the poppet valve 8 will contact the valve seat 25 of the poppet valve 8, thus closing the poppet valve 8. The spring constant of the energy storage spring 19 and the spring constant of the opening spring 20 is chosen in a way that the force, exerted by the loaded energy storage spring 19 is larger than the force, exerted by opening spring 20.

As soon as the actuated valve 9 has reached its upper position, as shown in Fig. 1c, i.e. as soon as the poppet valve 8 is closed, the position of the pilot oil supply valve 15 can be changed, so that the charging chamber 12 will consequently be fluidly connected to the low pressure fluid reservoir 17, thus depressurising charging chamber 12 (see Fig. 1c). This will cause the loading disc 11 to return to its lower position (see Fig. 1a) under the influence of the energy storage spring 19. It is to be noted that the force of the energy storage spring 19 is no longer needed for holding the actuated valve 9 in the closed position of the poppet valve 8. This is because the piston 26 of the pumping unit 27 is moving upwards, resulting in an elevated fluid pressure within the pumping chamber 22. This elevated fluid pressure within the pumping chamber 22 pushes the poppet head 7 onto the valve seat 25, holding poppet valve 8 in its closed position. The pressure of the fluid within pumping chamber 22 is symbolised by arrows 28. During this effective pumping phase of pumping unit 27, fluid is pushed out of the pumping chamber 22 through high pressure port 29 and check valve 30 towards the high pressure fluid reservoir 18 at an elevated pressure.

Preferably, the pilot oil supply valve 15 remains in the pressurising position for some time after the electric coil 4 has been switched off, so that charging chamber 12 remains pressurised. This can be important, because this way the pumping chamber 22 has time to build up pressure to hold the poppet valve 8 closed. When the poppet valve 8 closes quickly, it can have a tendency to depressurise the pumping chamber 22 temporarily, even below the pressure in the low pressure fluid reservoir 17. Therefore, the piston 26 has to travel some distance to recompress the fluid in the pumping chamber 22. Also, any air entrained in the hydraulic oil (either in charging chamber 12 and/or in pumping chamber 22) can make the hydraulic oil much more compressible than it is typically considered to be; this again can delay the buildup of pressure in the pumping chamber 22. When the pilot oil supply valve 15 is held in the pressurising position for some time after switching off the electric coil 4 (as described) it also allows some additional tolerance for the timing of the closing of the poppet valve 8 to prevent failed pumping strokes of the pumping unit 27.

Once the piston 26 has reached its upper dead centre and starts to move downward again, the pressure within pumping chamber 22 eventually falls below the pressure in the low pressure fluid reservoir 17. At this point, the poppet valve 8 reopens again under the force, exerted by the opening spring 20, as well as under the generated pressure differences. Additionally, the opening movement of the actuated valve 9 can be assisted by applying a (short) electrical pulse to the electric coil 4. Once the valve stem 5 has reached its lower position (driving disc 10 touches the flat face side 24 of electric coil for and poppet valve 8 is open) the actuated valve 9 is once again in the position, shown in Fig. 1a.

The actuation of electric coil 4, of pilot oil supply valve 15 and presumably of other parts can be performed by an electronic controlling unit 54 (see Fig. 5). This electronic controlling unit 54 can be, for example, a single board computer or the like. Such an electronic controlling unit 54 is normally already present with hydraulic machinery. Therefore, the main task for adapting the electronic controlling unit 54 is usually an increase in the complexity of the controlling software of the electronic controlling unit 54.

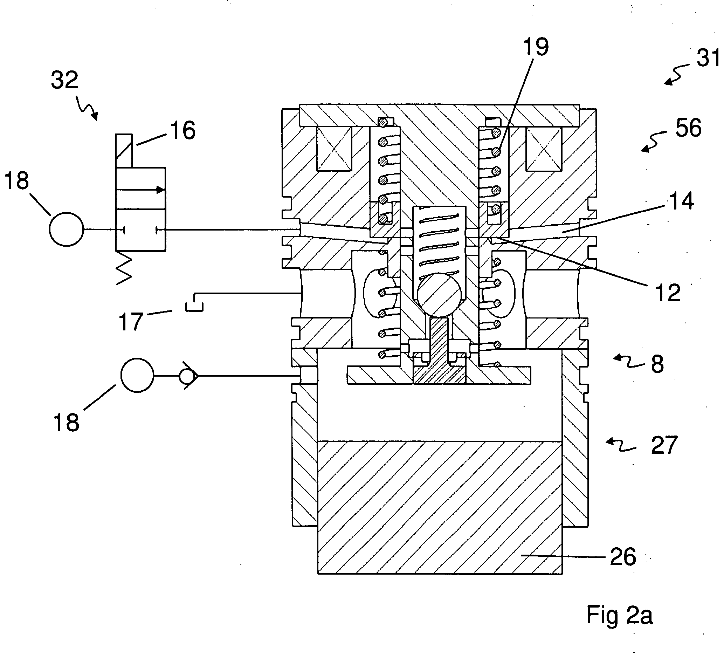

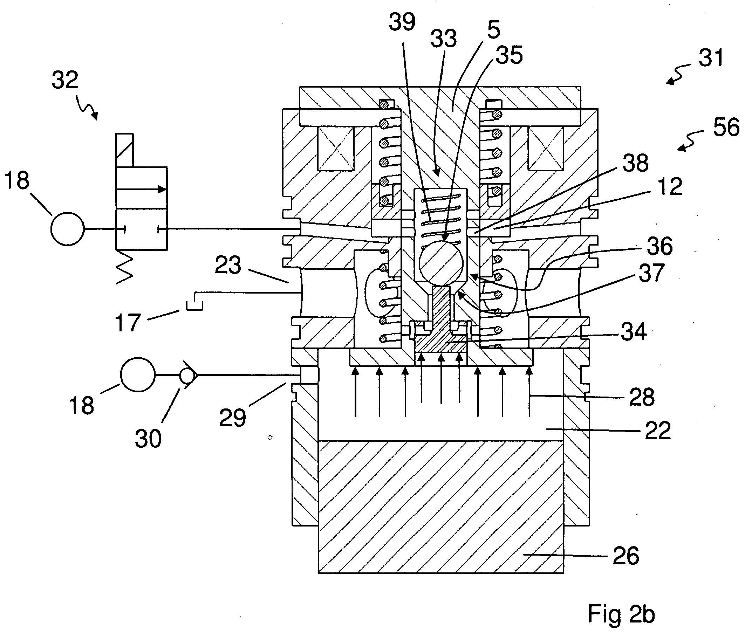

In Fig. 2, a second embodiment of an actuated valve 31 (valve actuator 56) is shown in a schematic cross section. The actuated valve 31 resembles the actuated valve 9, shown in Fig. 1, but is modified in certain aspects. For brevity, similar parts are denoted by identical reference signs (which is also true for the following embodiments of actuated valves 40, 42 / valve actuators 57, 58). Also, reference is made between the descriptions of the different embodiments of actuated valves 9, 31, 40, 42 / valve actuators 1, 56, 57, 58.

In the present embodiment of the actuated valve 31, the charging chamber 12 is connected to a high-pressure fluid reservoir 18 via a fluid feed line 14 and a pilot oil supply valve 32 in one direction. The pilot oil supply valve 32 is presently designed as a cut-off valve, i.e. a fluid connection between high pressure fluid reservoir 18 and fluid feed line 14 can be either connected or disconnected. The pressurisation phase of charging chamber 12, the mechanical loading phase of energy storage spring 19 and the closing movement of poppet valve 8 (i.e. the upward movement of the valve stem 5 is performed similar to Fig. 1).

However, the depressurisation of the charging chamber 12 of the present embodiment of the actuated valve 31 is different from the depressurisation phase of charging chamber 12 according to the previously described actuated valve 9. This can be particularly seen in Fig. 2b. For depressurising the charging chamber 12 of actuated valve 31, a depressurisation unit 33 is provided in the valve stem 5. As can be seen from Fig. 2b, the pressurised fluid in the pumping chamber 22 (during the upward movement of the piston 26) will not only cause hydraulic fluid to be pumped towards the high pressure fluid reservoir 18 via high pressure port 29 and check valve 30, but will also depress the depressurisation pin 34, provided in the poppet head 7 of the poppet valve 8 of the actuated valve 31. The depressurisation pin 34 will lift the ball 35 of the depressurisation check valve 36 from its corresponding valve seat 37. This will open a fluid channel between the charging chamber 12 and the low pressure port 23 of the actuated valve 31, which in turn is connected to the low pressure fluid reservoir 17. Therefore, the fluid in the charging chamber 12 is released to ambient pressure by venting holes 38, depressurisation unit 33 and low pressure port 23.

Once the piston 26 has reached its upper dead centre and starts to move downwards again, the pressure in the pumping chamber 22 will drop. This will not only cause the poppet valve 8 to open again, but will also cause the depressurisation pin 34 of the depressurisation unit 33 to return to its lower position. Therefore, the ball 35 of the depressurisation check valve 36 will return to its corresponding valve seat 37, thus closing the depressurisation check valve 36. The closing of depressurisation check valve 36 is assisted by the closing spring 39. Of course, during the depressurisation phase of charging chamber 12, the pilot oil supply valve 32 will be switched to it is shut-off position, as shown in Fig. 2b. An advantage of the presently shown actuated valve 31 according to Fig. 2 over the actuated valve 9 according to Fig. 1 is that it shows a less complex external actuation pattern. A disadvantage is that in case of a failed pumping stroke the actuated valve 31 cannot return to its initial position without an un-commanded pumping stroke of the pumping unit 27.

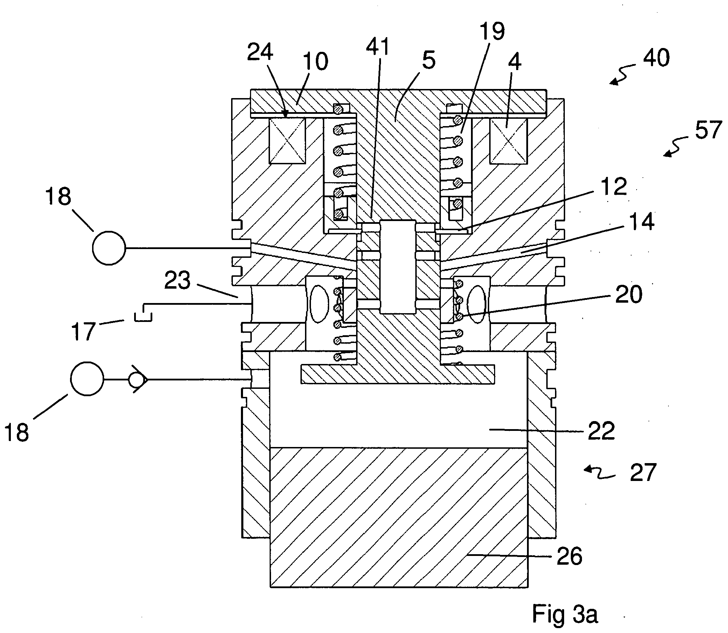

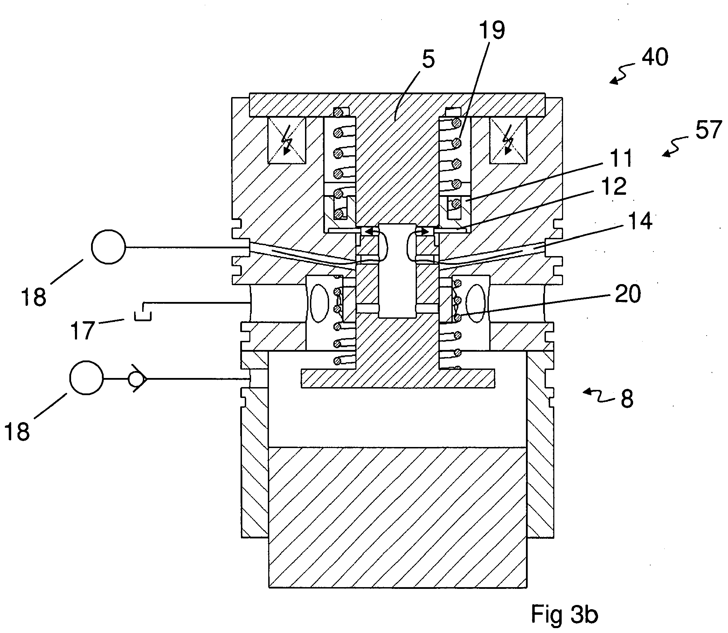

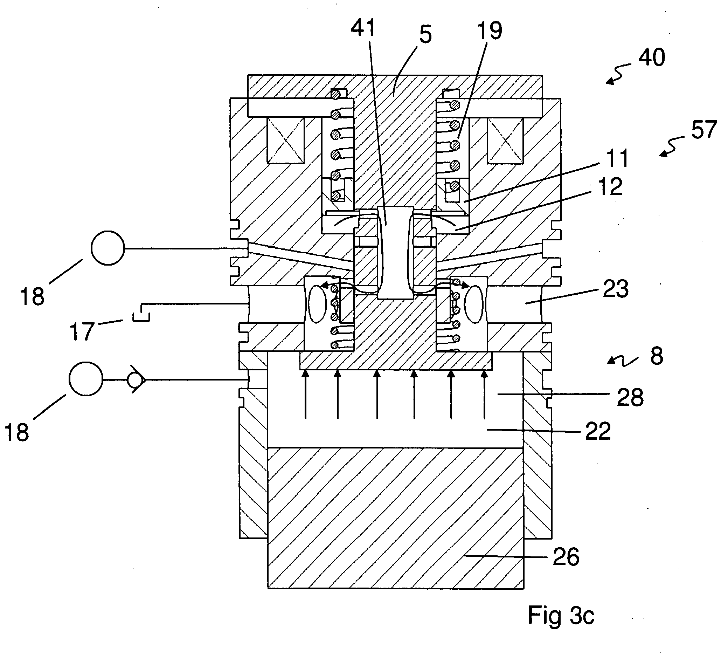

In Fig. 3, a third embodiment of an actuated valve 40 is shown in a schematic drawing. The different sketches of Fig. 3 (Fig. 3a to Fig. 3c) show the actuated valve 40 in different positions.

In Fig. 3a, the actuated valve 40 is shown in an initial starting position in which electric coil 4 is switched off (no electric current applied). In the present embodiment, the driving disc 10 is located at a certain distance from the flat face side 24 of the electric coil 4 in the initial position. The valve stem 5 is provided with an internal fluid connection circuitry 41, which will be explained in more detail in the following. In the position, shown in Fig. 3a, the valve stem 5 is in a position so that the charging chamber 12 is neither fluidly connected to the fluid feed line 14 (which in turn is connected to a high-pressure fluid port 18, nor to low pressure port 23, which, in turn, is connected to a low pressure fluid port 17. The initial position of valve stem 5 can be chosen by an appropriate dimensioning of energy storage spring 19 and opening spring 20, for example.

An actuation cycle of the actuated valve 40 begins by applying an electric current to electric coil 4, i.e. by switching on electric coil 4. This will cause the driving disc 10 to close the air gap between driving disc 10 and electric coil 4 and to contact driving disc 10 with the flat face side 24 of electric coil 4. The resulting position is shown in Fig. 3b. As can be seen from Fig. 3b, the valve stem 5 is now in a position that the fluid connection circuitry 41 in the valve stem 5 fluidly connects fluid feed line 14 with charging chamber 12. Therefore, charging chamber 12 is pressurised, causing loading disc 11 to move upward and to compress energy storage spring 19.

The movement of the actuated valve 40 for closing poppet valve 8 is initiated by switching off the electric current through electric coil 4, similar to the previously described embodiments of actuated valves 9, 31. The closed position of poppet valve 8 is depicted in Fig. 3c. As can be seen from the Fig., poppet valve 8 is in its closed position and held closed by the pressure of the fluid within pumping chamber 22. Furthermore, the valve stem is now in a position that the fluid connecting circuitry 41 in valve stem 5 fluidly connects charging chamber 12 and low pressure port 23. Therefore, the charging chamber 12 is depressurised, hydraulic fluid is leaving charging chamber 12 and charging disc 11 returns to its lower position under the influence of energy storage spring 19.

Once the piston 26 has reached its upper dead centre and starts to move down again, the pressure within pumping chamber 22 drops again, poppet valve 8 opens and actuated valve 40 returns to its initial position, as depicted in Fig. 3a.

The major advantage of the presently described actuated valve 40 over the previously described first and second embodiment of an actuated valve 9, 31 is the much simpler actuation scheme of the actuated valve 40. In particular, only a single electrical connection has to be made, namely the electrical connection for the electrical coil 4. The remaining actuation control of the actuated valve 40 is performed intrinsically, i.e. without any external commands. This way, a wrong actuation of the actuated valve 40 can be essentially avoided. The presently suggested actuated valve 40 can even recover from a failed pumping stroke without an un-commanded pumping cycle of the pumping unit 27.

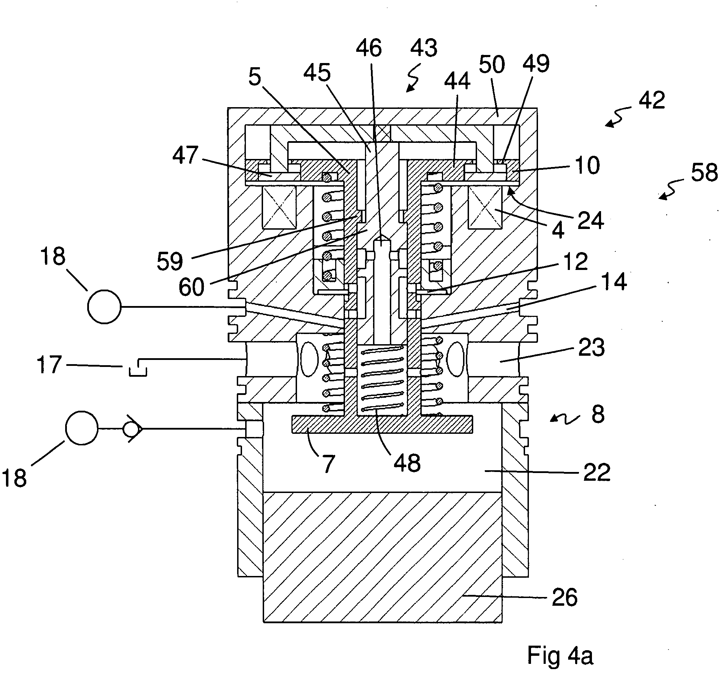

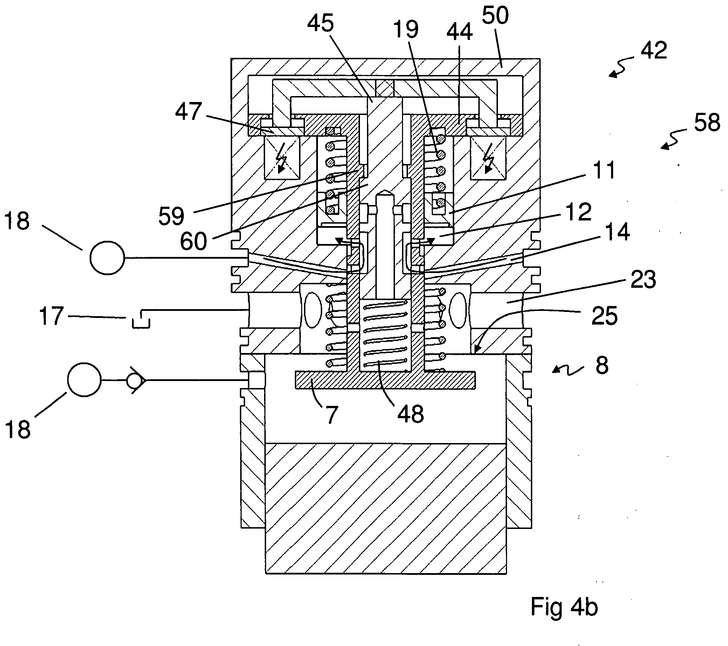

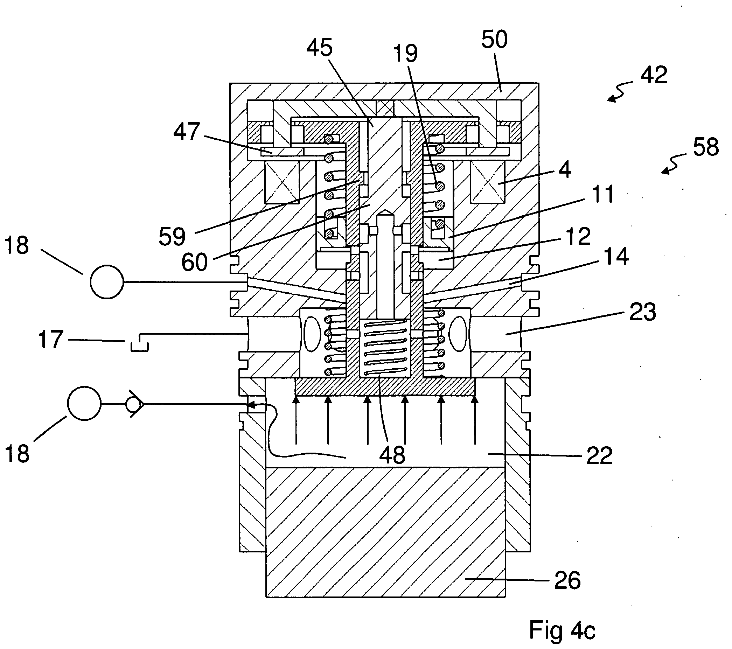

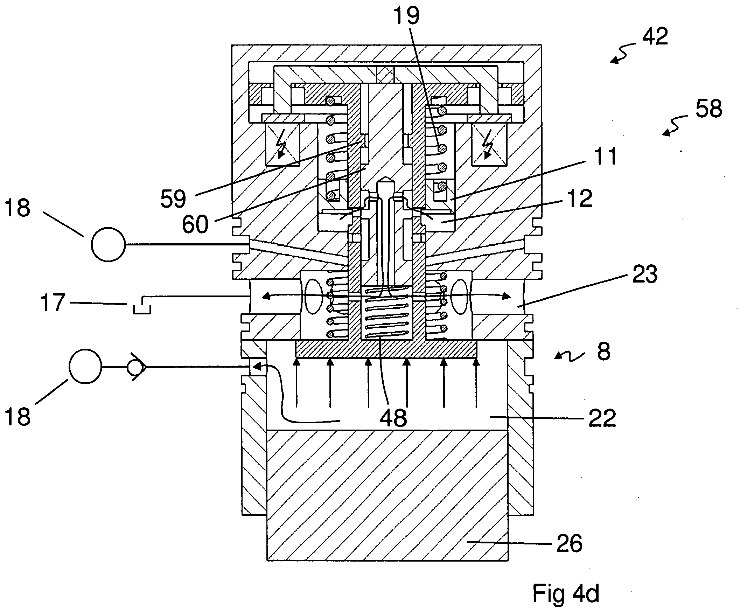

In Fig. 4, a fourth embodiment of an actuated valve 42 (valve actuator 58) is shown in a schematic cross section. The different sketches of Fig. 4 (Fig. 4a through 4d) show the actuated valve 42 in different positions.

In Fig. 4a, the actuated valve 42 is shown in its initial position. Similar to the third embodiment of an actuated valve 40 (see Fig. 3), the driving disc 10 is located at a certain distance from the flat face side 24 of electric coil 4 in the initial position of the actuated valve 42. Furthermore, it can be seen from Fig. 4 that the armature of the presently depicted actuated valve 42 is split up into two parts, namely into a first armature part 44 and a second armature part 45. The first armature part 44 comprises the driving disc 10, the valve stem 5 and the poppet head 7 of the poppet valve 8. The second armature part 45 comprises a fluid connection circuitry 46 which is arranged within the hollow valve stem 5 and which can be moved in an axial direction, relative to the valve stem 5. Furthermore, the second armature part 45 shows some plate-like extensions 47, which are arranged in proximity of the electric coil 4. If the electric coils 4 are not energised, the first armature part 44 and the second armature part 45 are pushed into the depicted (see Fig. 4a) relative position to each other under the influence of the tension spring 48. In this position, the plate-like extensions 47 rest in corresponding receiving holes 49 of the driving disc 10 of first armature part 44. As can be further seen from Fig. 4a, the fluid connection circuitry 46 is in a position so that charging chamber 12 is neither connected to the high pressure fluid reservoir 18 (via fluid feed line 14), nor to the low pressure fluid reservoir at 17 (via low pressure port 23).

The pumping stroke of the actuated valve 42 will be initiated by applying an electric current to electric coil 4. Due to the magnetic field, generated by the electric coil 4, the plate-like extensions 47 of second armature part 45 will be pulled towards electric coil 4, so that the plate-like extensions 47 finally contact the flat face side 24 of the electric coil 4. Under the influence of the tensioning spring 48, the first armature part 44 will also be moved into a lower position, in which the driving disc 10 will contact the flat face side 24 of electric coil 4. This position is shown in Fig. 4b. As can be seen from the Fig. 4b, the fluid connection circuitry 46 will now establish a fluid communication between fluid feed line 14 and charging chamber 12. This, in turn, will cause the loading disc 11 to move upward and to compress energy storage spring 19.

The closing of the poppet valve 8 is initiated by switching off electric coil 4. Due to the compressed energy storage spring 19, the first armature part 44 will move upward and poppet head 7 will contact its corresponding valve seat 25. Therefore, poppet valve 8 will be closed. The closed position of poppet valve 8 of actuated valve 42 is shown in Fig. 4c. As can be further seen from Fig. 4c, not only first armature part 44 has been moved upward, but also second armature part 45 is pushed upward under the influence of the tensioning spring 48. However, the upward movement of second armature part 45 is limited by mechanical contact between second armature part 45 and end cap 50 of actuated valve 42. As can be further seen from Fig. 4c, the fluid communication circuitry 46 is now set up in a way that no fluid connection is established between charging chamber 12 and fluid feed line 14 or charging chamber 12 and low pressure port 23, respectively. Therefore, loading disc 11 remains in its upper position initially, holding energy storage spring 19 in its compressed state.

After the controller has waited for a certain time, so that the poppet valve 8 is securely closed and held in place by the elevated fluid pressure in pumping chamber 22, the controller once again applies an electric signal to electric coil 4. This will cause the second armature part 45 to move downward, so that plate-like extensions 47 will contact the flat face side 24 of electric coil 4. This position is shown in Fig. 4d.

However, due to the fluid pressure in the pumping chamber 22, the poppet valve 8 will remain in its closed position, as long as the fluid pressure in pumping chamber 22 is still high. In particular, the spring constant of the tensioning spring 48 is not sufficient to overcome the force exerted by the fluid pressure in pumping chamber 22. Nevertheless, the changed configuration of fluid communication circuitry 46 now connects the charging chamber 12 to the low pressure port 23, thus depressurising charging chamber 12. Therefore, in this position, the loading disc 11 will return to its lower position, releasing the tension of energy storage spring 19.

Once the piston 26 has reached its upper dead centre and starts to move downward again, the pressure in the pumping chamber 22 drops and the poppet valve 8 opens again. The actuated valve 42 now returns to its initial position, as shown in Fig. 4a.

The big advantage of the presently described embodiment of an actuated valve 42 is that the electrical connections between the controller 54 and the actuated valve 42 are very simple. In particular, only one electrical connection (e.g. two wires) has to be established. Nevertheless, the depressurisation of the charging chamber 12 can be controlled by the application of an external signal. Therefore, the reliability of the actuation pattern of the actuated valve 42 can be very high. Another advantage of the presently described embodiment of the actuated valve 42 is that the actuated valve 42 can recover from a failed pumping stroke without performing a pumping cycle of the actuated valve. This is accordingly advantageous.

A modified form of the actuated valve 42 according to Fig. 4 can be achieved, if the first armature 44 and second armature 45 are set up in a way that on an actuation of electric coil 4, first armature 44 is preferentially pulled down (as compared to second armature 45; i.e., a higher force acts on first armature 44 as compared to second armature 45). This can be particularly done by an appropriate dimensioning and arrangement of plate-like extensions 47, receiving holes 49, (remaining parts of) loading disc 11 and electric coil 4. If the actuated valve 42 is modified in such a way, on an actuation of electric coil 4, first armature 44 is preferentially pulled down with a comparatively large force. Therefore, it is possible to bring the actuated valve 42 faster into a position, where the fluid connecting circuitry 46 opens the fluid communication between fluid feed line 14 and charging chamber 12.

As can be seen from the different sketches of Fig. 4, first armature 44 is provided with a ring-shaped protrusion 59 on its inner surface, while second armature 45 is provided with a ring-shaped collar 60 on its outer surface. Ring-shaped protrusion 59 and ring-shaped collar 60 are arranged and designed in a way that during the downward movement of first armature 44, ring-shaped protrusion 59 and ring-shaped collar 60 will come into contact and second armature 45 will be automatically brought into a lower position, when first armature 44 moves downward. In other words, ring-shaped protrusion 59 and ring-shaped collar 60 form a mechanical limitation for the relative movement of first armature 44 and second armature 45 in an axial direction.

Instead of providing a ring-shaped protrusion 59 and a ring-shaped collar 60, it would be also possible to use the bottom surfaces of the receiving holes 49 as a mechanical limitation for the movement of the plate-like extensions 47 of second armature 45 relative to loading disc 11 of first armature 44, and hence of the relative movement of first armature 44 and second armature 45 in the way described above.

Even with the described modification (preferential pulling down of first armature 44), the fluid pressure B in pumping chamber 22 will overweigh the forces, induced the first armature 44 by switching on electric coil 4 in the pumping/loading pressure relieving phase, depicted in Fig. 4c. Of course, the actuated valve 42 is set up in a way that switching on electric coil 4 not only causes an attractive force on the first armature 44, but also the (weaker) force on the second armature 45.

It has to be noted that the presently shown actuated valve 42 (and/or the described modification of this actuated valve 42) can be even designed without the end cap 50, as shown in Fig. 4. The main disadvantage with this is that a higher electrical current is necessary to move the plate like extensions 47 from the then more distant location in the direction of the electric coil 4.

Of course, it is possible to mix certain features of the previously described valve actuators 1, 56, 57, 58 (actuated valves 9, 31, 40, 42) with each other. In particular, it is also possible to provide all of the above described valve actuators 1, 56, 57, 58 (actuated valves 9, 31, 40, 42) with dampening devices, which provide some dampening of the moving valve stem 5, first armature part 44 and/or second armature part 45, when reaching one of their end positions. This way, wear and unnecessary noise can be prevented. The dampening device can be designed, for example, as a rubber piece, dampening the impact. Also, it is possible to design the various springs 19, 20, 48 in a way that the dampening functionality is achieved by the respective spring 19, 20, 48.

Generally speaking, the design of all of the previously described valve actuators 1, 56, 57, 58 (and/or actuated valves 9, 31, 40, 42) should be preferably done in a way that parts of the respective valve actuator 1, 56, 57, 58 and/or actuated valve 9, 31, 40, 42, being in contact with hydraulic oil, should have a preferably small cross section, being in "head-on" contact with the hydraulic oil, when being moved. This way, it is possible to reduce fluid forces, counteracting a movement of these parts of the valve actuator 1, 56, 57, 58 and/or actuated valve 9, 31, 40, 42, whenever the valve actuator 1, 56, 57, 58 and/or the actuated valve 9, 31, 40, 42 is actuated. Therefore, a faster operation of the valve actuator 1, 56, 57, 58 and/or the actuated valve 9, 31, 40, 42 can be achieved, which can be clearly advantageous. Of course, such a possibility does exist only on a limited scale (if possible at all) for certain parts, like for the poppet head 7 of the poppet valve 8, for example.

Just as an example, in Fig. 5, the use of the valve actuator 1 / an actuated valve 9 for a synthetically commutated hydraulic machine 53 is depicted. In the presently shown example of a synthetically commutated hydraulic machine 53, a piston 26 is moved cyclically in and out of a corresponding cylinder 55. The movement of the piston 26 is initiated by a cam 51 which is arranged off-axis on a revolving rotating axle 52. Due to the movement B of the piston 26 in and out of cylinder 55, the pumping chamber 22 has a cyclically changing volume.

During the intake stroke of the synthetically commutated hydraulic machine 53 (piston 26 is moving downward), hydraulic fluid is drawn in from a low pressure fluid reservoir 17 through the open poppet valve 8 of actuated valve 9 into pumping chamber 22. Once the piston 26 starts to move upward again, the volume in pumping chamber 22 contracts and fluid is pushed out of the pumping chamber 22. If the poppet valve 8 remains open, the hydraulic fluid is simply pushed back towards the low pressure fluid reservoir 17, without performing a pumping action towards the high pressure fluid reservoir 18.

Once the poppet valve 8 is closed after the appropriate actuation of the actuated valve 9, however, pressure will build up in the pumping chamber 22 and the hydraulic fluid is pushed to a high-pressure fluid reservoir 18, so that an effective pumping cycle is performed. If the closing actuation of the actuated valve 9 is performed somewhere in-between the bottom dead centre and the top dead centre of the piston 26, only a part of the maximum possible pumping volume of synthetically commutated hydraulic machine 53 will be used for effective pumping. Therefore, the synthetically commutated hydraulic machine can be quickly adapted to rapidly varying fluid flow demands. The actuation of the synthetically commutated hydraulic machine 53 can be performed by an electronic controller 54, for example.

In the previous description of valve actuators 1, 56, 57, 58, actuated valves 9, 31, 40, 42 and the synthetically commutated hydraulic machine 53, emphasis was put on (idle, partial and/or full) pumping strokes. Of course, the valve actuators 1, 56, 57, 58, the actuated valves 9, 31, 40, 42 and the synthetically commutated hydraulic machine 53 can be likewise used for (idle, partial and/or full) motoring strokes.

Although the pressurised fluid for the charging chamber 12 will usually be taken from the high pressure fluid reservoir 18 (or from a return flow of fluid, being at a still elevated pressure), a pilot fluid pump (not shown) can be provided for the starting phase of synthetically commutated hydraulic pump 53, when initially no pressure is present in the high pressure fluid reservoir 18.
1 valve actuator
2 driving section
3 loading section
4 electric coil
5 valve stem
6 fluid influencing part
7 poppet head
8 poppet valve
9 actuated valve
10 driving disc
11 loading disc
12 charging chamber
13 hole
14 fluid feed line
15 pilot oil supply valve
16 Electric actuator
17 low pressure fluid reservoir
18 high pressure fluid reservoir
19 energy storage spring
20 opening spring
21 body part
22 pumping chamber
23 low pressure port
24 flat face side
25 valve seat
26 piston
27 pumping unit
28 arrow
29 high pressure port
30 check valve
31 actuated valve
32 pilot oil supply valve
33 depressurisation unit
34 depressurisation pin
35 ball
36 depressurisation check valve
37 valve seat
38 venting hole
39 closing spring
40 actuated valve
41 fluid connection circuitry
42 actuated valve
43 armature
44 first armature part
45 second armature part
46 fluid connecting circuitry
47 plate like extensions
48 tensioning spring
49 receiving hole
50 end cap
51 cam
52 rotating axle
53 synthetically commutated hydraulic machine
54 electronic controller
55 cylinder
56 valve actuator
57 valve actuator
58 valve actuator
59 ring-shaped protrusion
60 ring-shaped collar

## Claims

1. Valve actuator (1, 56, 57, 58), comprising at least one driving means (5) for driving a valve (8) to be actuated by said valve actuator (1, 56, 57, 58), at least one triggering unit (4) for triggering a movement of said driving means (5) to open and/or to close said valve (8), wherein said triggering unit (4) is a directly driven triggering unit (4), converting an input signal directly into a triggering signal of said triggering unit (4) without a change of the energy form of said input signal, wherein at least one mechanical energy storing unit (19, 20, 48) is provided, **characterised by** at least one preloading means (11, 12) for preloading said mechanical energy storing unit (19, 20, 48), wherein said preloading means (11, 12) is designed as a fluid actuated preloading means (12) and wherein at least one internally operated controlling means (34, 41, 45, 46) and/or at least one externally operated controlling means (15, 32, 34, 54), controlling the operation of said preloading means (11, 12) is provided, that is designed as a cyclically operated unit.

2. Valve actuator (1, 56, 57, 58) according to claim 1, **characterised in that** said preloading means (11, 12) is designed as a hydraulic fluid actuated preloading means (12).

3. Valve actuator (1, 56, 57, 58) according to claim 1 or 2, **characterised in that** the internally ooperated controlling means (34, 41, 45, 46) is controlled, at least in part, by the position of said driving means (5) and/or by the operating state of said mechanical energy storing unit (19, 20, 48) and/or by the operating state of said triggering unit (4) and/or by the operating state of said preloading means (11, 12).

4. Valve actuator (1, 56, 57, 58) according to claim 3, **characterised in that** at least one of said internally operated controlling means (34, 41, 45, 46) is designed, at least in part, as a spool valve (41, 46) and/or as a check valve (34) and/or as a poppet valve (34) and/or as an armature device (45).

5. Valve actuator (1, 56, 57, 58) according to any of the preceding claims, **characterised in that** the externally operated controlling means (15, 32, 34, 54) is controlled, at least in part, by an externally applied controlling signal and/or by the operating state of the valve (8), actuated by said valve actuator (1, 56, 57, 58).

6. Valve actuator (1, 56, 57, 58) according to claim 5, **characterised in that** at least one of said externally operated controlling means (15, 32, 34, 54) is designed, at least in part, as a pressure operated valve (34) and/or as an electrically operated valve (15, 32) and/or as a spool valve and/or as a poppet valve (15) and/or as a check valve (15).

7. Valve actuator (1, 56, 57, 58) according to any of the preceding claims, **characterised in that** said preloading means (11, 12) can be selectively connected to a high-pressure fluid reservoir (18) and/or to a low pressure fluid reservoir (17), preferably at least in part by at least one of said internally operated controlling means (34, 41, 45, 46) and/or said externally operated controlling means (15, 32, 34, 54).

8. Valve actuator (1, 56, 57, 58) according to any of the preceding claims, **characterised in that** said triggering unit (4) is designed as an electrically actuated triggering unit (4), preferably comprising at least one magnetic field generating means (4), more preferably comprising a magnetic coil (4).

9. Valve actuator (1, 56, 57, 58) according to any of the preceding claims, **characterised in that** said mechanical energy storing unit (19, 20, 48) comprises at least one device, taken from the group containing springs (19, 20, 48), metal springs (19, 20, 48), elastic material, rubber, fluid energy storage devices, hydraulic energy storage devices and gas pressure storage devices.

10. Valve actuator (1, 56, 57, 58) according to any of the preceding claims, **characterised in that** at least one dampening means (19, 20, 48), in particular at least one dampening spring (19, 20, 48) is provided.

11. Valve actuator (1, 56, 57, 58) according to any of the preceding claims, **characterized in that** said triggering unit (4) and/or said driving means (5) and/or said mechanical energy storing unit (19, 20, 48) and/or said internally operated controlling means (34, 41, 45, 46) and/or said externally operated controlling means (15, 32, 34, 54) is designed as a cyclically operated unit that is operatable during essentially every working cycle of said valve actuator (1).

12. Valve unit (9, 31, 40, 42), in particular valve unit (9, 31, 40, 42) for a fluid working machine (53), **characterised by** at least one valve actuator (1, 56, 57, 58) according to any of claims 1 to 11.

13. Fluid working machine (53), **characterised by** at least one valve actuator (1, 56, 57, 58) according to any of claims 1 to 11 and/or at least one valve unit (9, 31, 40, 42) according to claim 12.

14. Fluid working machine (53) according to claim 13, **characterised in that** said fluid working machine (53) is at least partially designed as a hydraulic fluid working machine (53), preferably as a synthetically commutated hydraulic machine (53).

## Patentansprüche

1. Ventilaktuator (1, 56, 57, 58), aufweisend zumindest ein Antriebsmittel (5) zum Antrieb eines von dem Ventilaktuator (1, 56, 57, 58) anzutreibenden Ventils (8), zumindest eine Triggereinheit (4) zur Triggerung einer Bewegung des Antriebsmittels (5) um das Ventil (8) zu öffnen und/oder zu schließen, wobei es sich bei der Triggereinheit (4) um eine direkt angetriebene Triggereinheit (4) handelt, die ein Eingangssignal direkt in ein Triggersignal der Triggereinheit (4) umwandelt, ohne die Energieform des Eingangssignals zu ändern, wobei zumindest eine mechanische Energiespeichereinheit (19, 20, 48) vorgesehen ist, **gekennzeichnet durch** zumindest ein Vorspannmittel (11, 12) zur Vorspannung der mechanischen Energiespeichereinheit (19, 20, 48), wobei das Vorspannmittel (11, 12) als fluidangetriebenes Vorspannmittel (12) ausgebildet ist und wobei zumindest ein intern betriebenes Steuerungsmittel (34, 41, 45, 46) und/oder zumindest ein extern betriebenes Steuerungsmittel (15, 32, 34, 54), das den Betrieb des Vorspannmittels (11,12) steuert, und welches als zyklisch betriebene Einheit ausgebildet ist, vorgesehen ist.

2. Ventilaktuator (1, 56, 57, 58) nach Anspruch 1, **dadurch gekennzeichnet, dass** das Vorspannmittel (11, 12) als ein hydraulikfluidbetriebenes Vorspannmittel (12) ausgebildet ist.

3. Ventilaktuator (1, 56, 57, 58) nach Anspruch 1 oder 2, **dadurch gekennzeichnet, dass** das intern betriebene Steuerungsmittel (34, 41, 45, 46) zumindest teilweise durch die Position des Antriebsmittels (5) und/oder durch den Betriebszustand der mechanischen Energiespeichereinheit (19, 20, 48) und/oder durch den Betriebszustand der Triggereinheit (4) und/oder durch den Betriebszustand des Vorspannmittels (11, 12) gesteuert wird.

4. Ventilaktuator (1, 56, 57, 58) nach Anspruch 3, **dadurch gekennzeichnet, dass** zumindest eines der intern betriebenen Steuerungsmittel (34, 41, 45, 46) zumindest teilweise als Kolbenventil (41, 46) und/oder als Rückschlagventil (34) und/oder als Sitzventil (34) und/oder als Ankervorrichtung (45) ausgebildet ist.

5. Ventilaktuator (1, 56, 57, 58) nach einem der vorangehenden Ansprüche, **dadurch gekennzeichnet, dass** das extern betriebene Steuerungsmittel (15, 32, 34, 54) zumindest teilweise mittels eines extern angelegten Steuerungssignals und/oder durch den Betriebszustand des vom Ventilaktuator (1, 56, 57, 58) angesteuerten Ventils (8) gesteuert wird.

6. Ventilaktuator (1, 56, 57, 58) nach Anspruch 5, **dadurch gekennzeichnet, dass** zumindest eines der extern betriebenen Steuerungsmittel (15, 32, 34, 54) zumindest teilweise als druckbetriebenes Ventil (34) und/oder als elektrisch betriebenes Ventil (15, 32) und/oder als Kolbenventil und/oder als Sitzventil (15) und/oder als Rückschlagventil (15) ausgebildet ist.

7. Ventilaktuator (1, 56, 57, 58) nach einem der vorangehenden Ansprüche, **dadurch gekennzeichnet, dass** das Vorspannmittel (11, 12) wahlweise mit einem Hochdruckfluidreservoir (18) und/oder einem Niederdruckfluidreservoir (17) verbunden werden kann, vorzugsweise zumindest teilweise mittels zumindest einem der intern betriebenen Steuerungsmittel (34, 41, 45, 46) und/oder mittels zumindest einem der extern betriebenen Steuerungsmittel (15, 32, 34, 54).

8. Ventilaktuator (1, 56, 57, 58) nach einem der vorangehenden Ansprüche, **dadurch gekennzeichnet, dass** die Triggereinheit (4) als elektrisch angetriebene Triggereinheit (4) ausgebildet ist, und vorzugsweise zumindest ein Magnetfelderzeugungsmittel (4), besonders bevorzugt eine Magnetspule (4), aufweist.

9. Ventilaktuator (1, 56, 57, 58) nach einem der vorangehenden Ansprüche, **dadurch gekennzeichnet, dass** die mechanische Energiespeichereinheit (19, 20, 48) zumindest eine Einrichtung aufweist, die der Gruppe entnommen ist, die Federn (19, 20, 48), Metallfedern (19, 20, 48), elastische Materialien, Gummi, Fluidenergiespeichereinheiten, Hydraulikenergiespeichereinheiten und Gasdruckspeichereinheiten umfasst.

10. Ventilaktuator (1, 56, 57, 58) nach einem der vorangehenden Ansprüche, **dadurch gekennzeichnet, dass** zumindest ein Dämpfungsmittel (19, 20 ,48), insbesondere zumindest eine Dämpfungsfeder (19, 20, 48), vorgesehen ist.

11. Ventilaktuator (1, 56, 57, 58) nach einem der vorangehenden Ansprüche, **dadurch gekennzeichnet, dass** die Triggereinheit (4) und/oder das Antriebsmittel (5) und/oder die mechanische Energiespeichereinheit (19, 20, 48) und/oder das intern betriebene Steuerungsmittel (34, 41, 45, 46) und/oder das extern betriebene Steuerungsmittel (15, 32, 34, 54) als zyklisch betriebene Einheit ausgebildet ist, die während im Wesentlichen jedes Arbeitszyklusses des Ventilaktuators (1) betrieben werden kann.

12. Ventileinheit (9, 31, 40, 42), insbesondere Ventileinheit (9, 31, 40, 42) für eine Fluidarbeitsmaschine (53), **gekennzeichnet durch** zumindest einen Ventilaktuator (1, 56, 57, 58) nach einem der Ansprüche 1 bis 11.

13. Fluidarbeitsmaschine (53), **gekennzeichnet durch** zumindest einen Ventilaktuator (1, 56, 57, 58) nach einem der Ansprüche 1 bis 11 und/oder zumindest eine Ventileinheit (9, 31, 40, 42) nach Anspruch 12.

14. Fluidarbeitsmaschine (53) nach Anspruch 13, **dadurch gekennzeichnet, dass** die Fluidarbeitsmaschine (53) zumindest teilweise als Hydraulikfluidarbeitsmaschine (53) ausgebildet ist, vorzugsweise als synthetisch kommutierte Hydraulikmaschine (53).

## Revendications

1. Actionneur pour soupape (1, 56, 57, 58), comportant au moins un moyen d'entraînement (5) pour entraîner une soupape (8) destinée à être actionnée par ledit actionneur pour soupape (1, 56, 57, 58), au moins une unité de déclenchement (4) pour déclencher un mouvement dudit moyen d'entraînement (5) pour ouvrir et/ou fermer ladite soupape (8), dans lequel ladite unité de déclenchement (4) est une unité de déclenchement à entraînement direct (4), convertissant un signal d'entrée directement en un signal de déclenchement de ladite unité de déclenchement (4) sans changement de la forme d'énergie dudit signal d'entrée, dans lequel au moins une unité de stockage d'énergie mécanique (19, 20, 48) est prévue, **caractérisé par** au moins un moyen de précontrainte (11, 12) pour précontraindre ladite unité de stockage d'énergie mécanique (19, 20, 48), dans lequel ledit moyen de précontrainte (11, 12) est conçu en tant que moyen de précontrainte à actionnement fluide (12) et dans lequel au moins un moyen de contrôle manoeuvré intérieurement (34, 41, 45, 46) et/ou au moins un moyen de contrôle manoeuvré extérieurement (15, 32, 34, 54), contrôlant la manoeuvre dudit moyen de précontrainte (11, 12) est prévu, et est conçu en tant qu'unité manoeuvrée cycliquement.

2. Actionneur pour soupape (1, 56, 57, 58) selon la revendication 1, **caractérisé en ce que** ledit moyen de précontrainte (11, 12) est conçu en tant que moyen de précontrainte à actionnement fluide hydraulique (12).

3. Actionneur pour soupape (1, 56, 57, 58) selon la revendication 1 ou 2, **caractérisé en ce que** le moyen de contrôle manoeuvré intérieurement (34, 41, 45, 46) est contrôlé, au moins en partie, par la position dudit moyen d'entraînement (5) et/ou par l'état de manoeuvre de ladite unité de stockage d'énergie mécanique (19, 20, 48) et/ou par l'état de manoeuvre de ladite unité de déclenchement (4) et/ou par l'état de manoeuvre dudit moyen de précontrainte (11, 12).

4. Actionneur pour soupape (1, 56, 57, 58) selon la revendication 3, **caractérisé en ce qu'**au moins un dudit moyen de contrôle manoeuvré intérieurement (34, 41, 45, 46) est conçu, au moins en partie, en tant que soupape à piston (41, 46) et/ou en tant que clapet anti-retour (34) et/ou en tant que soupape champignon (34) et/ou en tant que dispositif formant armature (45).

5. Actionneur pour soupape (1, 56, 57, 58) selon l'une quelconque des revendications précédentes, **caractérisé en ce que** le moyen de contrôle manoeuvré extérieurement (15, 32, 34, 54) est contrôlé, au moins en partie, par un signal de contrôle appliqué extérieurement et/ou par l'état de manoeuvre de la soupape (8) actionnée par ledit actionneur pour soupape (1, 56, 57, 58).

6. Actionneur pour soupape (1, 56, 57, 58) selon la revendication 5, **caractérisé en ce qu'**au moins un desdits moyens de contrôle manoeuvré extérieurement (15, 32, 34, 54) est conçu, au moins en partie, en tant que soupape manoeuvrée par pression (34) et/ou en tant que soupape manoeuvrée électriquement (15, 32) et/ou en tant que soupape à piston et/ou en tant que soupape champignon (15) et/ou en tant que clapet anti-retour (15).

7. Actionneur pour soupape (1, 56, 57, 58) selon l'une quelconque des revendications précédentes, **caractérisé en ce que** ledit moyen de précontrainte (11, 12) peut être sélectivement relié à un réservoir de fluide haute-pression (18) et/ou à un réservoir de fluide basse-pression (17), préférentiellement au moins en partie par au moins un desdits moyens de contrôle manoeuvré intérieurement (34, 41, 45, 46) et/ou desdits moyens de contrôle manoeuvré extérieurement (15, 32, 34, 54).

8. Actionneur pour soupape (1, 56, 57, 58) selon l'une quelconque des revendications précédentes, **caractérisé en ce que** ladite unité de déclenchement (4) est conçue en tant qu'unité de déclenchement à actionnement électrique (4), comprenant préférentiellement au moins un moyen de génération de champ magnétique (4), comprenant plus préférentiellement une bobine magnétique (4).

9. Actionneur pour soupape (1, 56, 57, 58) selon l'une quelconque des revendications précédentes, **caractérisé en ce que** ladite unité de stockage d'énergie mécanique (19, 20, 48) comprend au moins un dispositif, choisi dans le groupe contenant les ressorts (19, 20, 48), les ressorts métalliques (19, 20, 48), les matériaux élastiques, le caoutchouc, les dispositifs de stockage d'énergie fluide, les dispositifs de stockage d'énergie hydraulique et les dispositifs de stockage de pression gazeuse.

10. Actionneur pour soupape (1, 56, 57, 58) selon l'une quelconque des revendications précédentes, **caractérisé en ce qu'**au moins un moyen d'amortissement (19, 20, 48), en particulier au moins un ressort d'amortissement (19, 20, 48) est prévu.

11. Actionneur pour soupape (1, 56, 57, 58) selon l'une quelconque des revendications précédentes, **caractérisé en ce que** ladite unité de déclenchement (4) et/ou ledit moyen d'entraînement (5) et/ou ladite unité de stockage d'énergie mécanique (19, 20, 48) et/ou ledit moyen de contrôle manoeuvré intérieurement (34, 41, 45, 46) et/ou ledit moyen de contrôle manoeuvré extérieurement (15, 32, 34, 54) est conçu(e) comme unité manoeuvrée cycliquement qui est manoeuvrable pendant essentiellement chaque cycle de travail dudit actionneur pour soupape (1).

12. Unité de soupape (9, 31, 40, 42), en particulier unité de soupape (9, 31, 40, 42) pour machine à travail fluide (53), **caractérisée par** au moins un actionneur pour soupape (1, 56, 57, 58) selon l'une quelconque des revendications 1 à 11.

13. Machine à travail fluide (53), **caractérisée par** au moins un actionneur pour soupape (1, 56, 57, 58) selon l'une quelconque des revendications 1 à 11 et/ou au moins une unité de soupape (9, 31, 40, 42) selon la revendication 12.

14. Machine à travail fluide (53) selon la revendication 13, **caractérisée en ce que** ladite machine à travail fluide (53) est au moins partiellement conçue en tant que machine à travail fluide hydraulique (53), préférentiellement en tant que machine hydraulique commutée synthétiquement (53).
